# EUROPEAN PATENT SPECIFICATION

(11) **EP 4 002 326 B1**
(45) Date of publication and mention of the grant of the patent: **17.09.2025**
(21) Application number: 21207339.9
(22) Date of filing: 09.11.2021
(51) Int. Cl.: G01C 21/24, G01C 23/00, G08G 5/25, G08G 5/26, G08G 5/72, G08G 5/74, G08G 5/76, G08G 5/21

(54) **SYSTEM AND METHOD FOR DYNAMICALLY AUGMENTING RASTER CHARTS DISPLAYED ON A COCKPIT DISPLAY**
SYSTEM UND VERFAHREN ZUR DYNAMISCHEN ERWEITERUNG VON AUF EINEM COCKPIT-DISPLAY ANGEZEIGTEN RASTERBILDERN
SYSTÈME ET SYSTÈME D'AUGMENTATION DYNAMIQUE DES CARTES MATRICIELLES AFFICHÉES SUR UN AFFICHAGE DE POSTE DE PILOTAGE

(30) Priority: 11.11.2020 IN 202011049239; 07.01.2021 US 202117143729
(43) Date of publication of application: 25.05.2022
(73) Proprietor: Honeywell International Inc., Charlotte, NC 28202 (US)
(72) Inventor: HE, Gang, Charlotte, 28202 (US); FEYEREISEN, Thea, Charlotte, 28202 (US); DESAI, Pavan Kumar, Charlotte, 28202 (US); AJJAVARA, Atmacharan, Charlotte, 28202 (US); R, Rakshit, Charlotte, 28202 (US)
(74) Representative: Ingrassia, Fisher & Lorenz UK Ltd.

(56) References cited:
- WO-A1-2009/002603
- US-A- 4 827 419
- US-A- 5 978 715
- US-A1- 2010 333 040
- US-A1- 2015 149 081
- US-A1- 2015 239 574
- US-A1- 2017 138 759
- US-A1- 2020 184 830
- US-B1- 8 878 872

## Description

### CROSS REFERENCE TO RELATED APPLICATION

This application claims priority to Indian Provisional Patent Application No. 202011049239, filed November 11, 2021.

### TECHNICAL FIELD

Embodiments of the subject matter described herein relate generally to flight deck display systems. More particularly, embodiments of the subject matter relate to flight deck display systems for displaying raster charts.

### BACKGROUND

Raster charts, such as sectional, Hi/Lo IFR charts published by the FAA, can be very useful for pilots. A raster chart is an electronic picture of a paper chart obtained typically through an accurate, detailed scanning of the paper chart. Raster charts, typically, have exactly the same information as the paper chart. When raster charts are used within an integrated Navigation display environment, a typical approach is to position the raster data underneath the navigational data. The raster data forms an image and many existing Navigational display elements overlap with raster image elements. The overlapping elements may have different features, such as different colors, shapes, and/or dimensions. These differences and the overlap can lead to significant display clutter and increased flight crew workload to declutter and deconflict navigational data associated with chart image data.

Hence, it is desirable to provide a raster data display without significant display clutter. Furthermore, other desirable features and characteristics of the present invention will become apparent from the subsequent detailed description and the appended claims, taken in conjunction with the accompanying drawings and the foregoing technical field and background.

US2015239574A1 discloses a known system for decluttering an aircraft display. Chart data, flight data and user input data are obtained. User input data reflects pilot preferences. A modified combination of chart data and flight data is generated in response to user input data. Symbology that is graphically representative of the modified combination is displayed.

### SUMMARY

The present invention relates to a flight deck system in an aircraft for selectively displaying information from raster charts on a display device according to appended claim 1.

Furthermore, other desirable features and characteristics will become apparent from the subsequent detailed description and the appended claims, taken in conjunction with the accompanying drawings and the preceding background.

### BRIEF DESCRIPTION OF THE DRAWINGS

Embodiments of the subject matter will hereinafter be described in conjunction with the following drawing figures, wherein like numerals denote like elements, and wherein:
FIG. 1 is a block diagram depicting an example aircraft environment for implementing a raster chart display system for causing raster chart data from a raster chart to be displayed on a cockpit display device, in accordance with some embodiments;
FIGS. 2A and 2B are diagrams depicting example augmented raster charts that may be generated by an example raster chart display system, in accordance with some embodiments;
FIGS. 3A and 3B are diagrams depicting example augmented raster charts that may be generated by an example raster chart display system, in accordance with some embodiments;
FIGS. 4A and 4B are diagrams depicting example augmented raster charts that may be generated by an example raster chart display system, in accordance with some embodiments; and
FIG. 5 is a process flow chart depicting an example process in an aircraft for selectively displaying information from raster charts on a cockpit display device, in accordance with some embodiments.

### DETAILED DESCRIPTION

The following detailed description is merely exemplary in nature and is not intended to limit the application and uses. Furthermore, there is no intention to be bound by any expressed or implied theory presented in the preceding technical field, background, summary, or the following detailed description. As used herein, the term "module" refers to any hardware, software, firmware, electronic control component, processing logic, and/or processor device, individually or in any combination, including without limitation: application specific integrated circuit (ASIC), a field-programmable gate-array (FPGA), an electronic circuit, a processor (shared, dedicated, or group) and memory that executes one or more software or firmware programs, a combinational logic circuit, and/or other suitable components that provide the described functionality.

Embodiments of the present disclosure may be described herein in terms of functional and/or logical block components and various processing steps. It should be appreciated that such block components may be realized by any number of hardware, software, and/or firmware components configured to perform the specified functions. For example, an embodiment of the present disclosure may employ various integrated circuit components, *e.g.,* memory elements, digital signal processing elements, logic elements, look-up tables, or the like, which may carry out a variety of functions under the control of one or more microprocessors or other control devices. In addition, those skilled in the art will appreciate that embodiments of the present disclosure may be practiced in conjunction with any number of systems, and that the systems described herein is merely exemplary embodiments of the present disclosure.

For the sake of brevity, conventional techniques related to signal processing, data transmission, signaling, control, and other functional aspects of the systems (and the individual operating components of the systems) may not be described in detail herein. Furthermore, the connecting lines shown in the various figures contained herein are intended to represent example functional relationships and/or physical couplings between the various elements. It should be noted that many alternative or additional functional relationships or physical connections may be present in an embodiment of the present disclosure.

The subject matter described herein discloses apparatus, systems, techniques, and articles for providing a dynamically augmented raster data display on a cockpit display. The apparatus, systems, techniques, and articles provided herein can allow a raster data display priority to be dynamically adjusted, and/or localized areas on a raster map to be dynamically associated with geographically collocated Nav/culture/structural information.

The apparatus, systems, techniques, and articles provided herein can allow user triggering or automatic triggering of dynamic information augmentation for raster data areas of interests. Dynamic information augmentation for raster data areas of interests can provide flight crews with additional information for operation planning or other purposes.

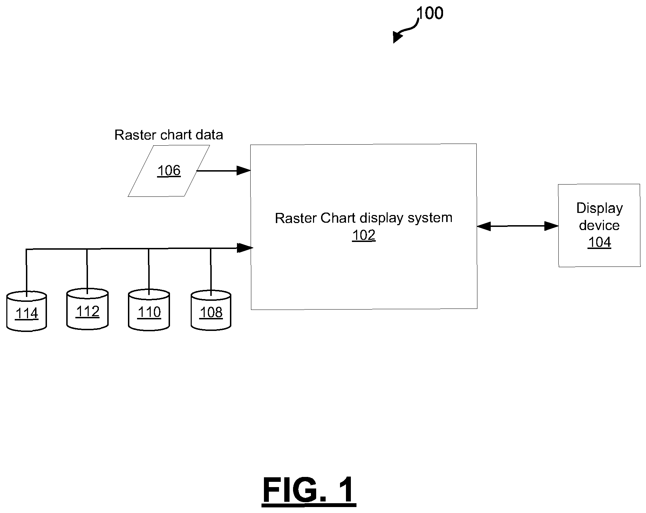

FIG. 1 is a block diagram depicting an example aircraft environment 100 for implementing a raster chart display system 102 for causing raster chart data 106 from a raster chart to be displayed on a cockpit display device 104 (*e.g.,* a head down display (HDD), a head up display (HUD), a primary flight display (PFD), a multifunction display (MFD), a navigation display, an electronic flight bag (EFB), a tablet computer, or other types of display devices used in an aircraft cockpit). A raster chart is an electronic picture of a paper chart obtained typically through an accurate, detailed scanning of the paper chart.

The raster chart display system 102 is implemented by flight deck equipment in an aircraft. The flight deck equipment may be dedicated hardware in the aircraft for implementing the raster chart display system 102 or may be flight deck equipment that implements other flight deck functions. The raster chart display system includes a controller that includes at least one processor and a computer-readable storage device or media encoded with programming instructions for configuring the controller. The processor may be any custom-made or commercially available processor, a central processing unit (CPU), a graphics processing unit (GPU), an application specific integrated circuit (ASIC), a field programmable gate array (FPGA), an auxiliary processor among several processors associated with the controller, a semiconductor-based microprocessor (in the form of a microchip or chip set), any combination thereof, or generally any device for executing instructions.

The computer readable storage device or media may include volatile and nonvolatile storage in read-only memory (ROM), random-access memory (RAM), and keep-alive memory (KAM), for example. KAM is a persistent or non-volatile memory that may be used to store various operating variables while the processor is powered down. The computer-readable storage device or media may be implemented using any of a number of known memory devices such as PROMs (programmable read-only memory), EPROMs (electrically PROM), EEPROMs (electrically erasable PROM), flash memory, or any other electric, magnetic, optical, or combination memory devices capable of storing data, some of which represent executable programming instructions, used by the controller.

The raster chart display system 102 is configured to generate a dynamically augmented raster data display for use on the cockpit display device 104. The dynamically augmented raster data display, in normal operation, displays some, but not all, the raster data 106 from the paper chart from which the raster data display was derived. The dynamically augmented raster data display is augmented, by the raster chart display system 102, to display various portions of the non-displayed data from one or more geo-referenced data sources upon certain conditions occurring. The geo-referenced data sources may include one or more of an EGPWS (enhanced ground proximity warning system) terrain database 108, an airports database 110, a navigation aids (NAVAID) database 112, an airspace database 114, flight plan data, weather data, traffic data, or some other source.

The certain conditions may occur upon one or more of: a cursor touch action or hovering over a geographical region of the dynamically augmented raster data display, selection of a geographical region of the dynamically augmented raster data display (*e.g.,* via click action using a cursor), automatically upon an aircraft reaching a geographical area, and/or the aircraft reaching a geographical area coupled with a cursor hovering action or touch action on a touchscreen over the geographical region or selection of the geographical region of the dynamically augmented raster data display. Upon the certain conditions occurring, the raster chart display system 102 causes certain portions of the previously non-displayed data related to the objects in the paper chart from which the raster data display was derived and/or data from other sources to be displayed as an overlay over the dynamically augmented raster data display.

This allows the raster chart display system 102 to provide flight crew on a cockpit display in an aircraft with essential information from a paper chart without cluttering the display with nonessential information, and on demand or automatically augment the display with additional, geographically relevant information via an overlay. The data included in the overlay are limited to geographically relevant data. The geographically relevant data includes data that are related to an automatically selected geographical region (*e.g.,* upon the aircraft reaching a predetermined geographical location) and/or data that are related to a manually selected geographical region (*e.g.,* via cursor hovering or cursor selection).

The raster chart display system 102 can accomplish the generation of a dynamically augmented raster data display by assigning priority levels to different types of raster data 106 from a raster chart and only causing the augmented raster data having a predetermined priority level(s) to be displayed until certain conditions occur. When those certain conditions occur, the raster chart display system 102 is configured to cause augmented raster data with a different priority level(s) that are geographical relevant to be displayed as an overlay over the prior display.

The raster chart display system 102 is also configured to geographically correlate different types of database data (*e.g.,* data from databases 108, 110, 112, 114) to the raster data 106 and make the correlated database data available to the display device 104 in one or more hidden layers that are hidden from display. The raster chart display system 102 is also configured to assign priority levels to the different types of database data and when certain conditions occur cause database data having predetermined priority levels that are geographical relevant to be displayed as an overlay.

The raster chart display system 102 is also configured to geographically correlate different types of dynamically generated information related to a flight path or plan for the aircraft to the raster data 106 and make the correlated dynamically generated information related to a flight path or plan available to the display device 104 in one or more hidden layers that are hidden from display. The raster chart display system 102 is also configured to assign priority levels to the different types of dynamically generated information and when certain conditions occur cause different types of dynamically generated information having predetermined priority levels that are geographical relevant to be displayed as an overlay. The different types of dynamically generated information may include flight plan data, weather data, and traffic data and others.

The raster chart display system 102 may allow a user to select the type of raster data 106, database data, and dynamically generated information to be displayed in a normal raster data display (*e.g.,* before dynamic augmentation is applied) by allowing a user to select the data priority levels for the data to be displayed in the normal raster data display. The raster chart display system 102 may also allow a user to select the type of raster data 106, database data, and/or dynamically generated information to displayed in a dynamically augmented display when certain conditions occur by allowing a user to select the data priority levels for the data to be displayed when the certain conditions occur.

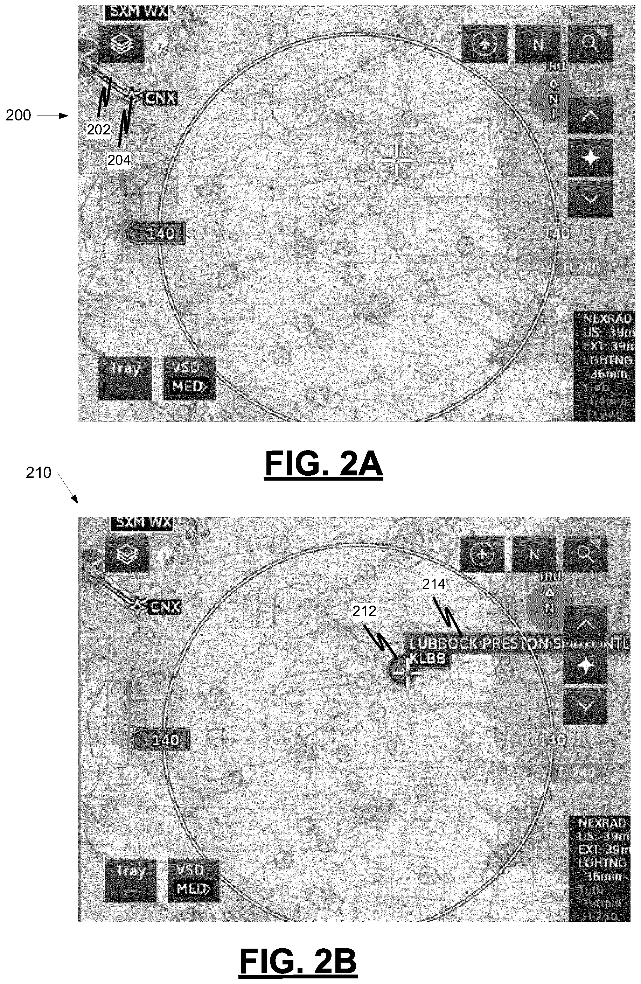

FIGS. 2A and 2B are diagrams depicting example augmented raster charts that may be generated by the raster chart display system 102. FIG. 2A is an example sectional chart depicting an example augmented raster data display 200 that depicts some, but not all, the aeronautical information from an example IFR enroute low altitude chart for navigation under instrument flight rules. An IFR chart may include, in addition to topography information, information regarding: air traffic services, airports that have an instrument approach procedure or a minimum 3000' hard surface runway, airways/route data, cruising altitudes, fixes/ATC reporting points, limits of controlled airspace, military training routes, off route obstruction clearance altitudes (OROCA), radio aids to navigation, RNAV routes, special use airspace areas, tabulations (MTRs, SUAs, MOAs, airport data), and other relevant information. The various types of information are assigned to different priority levels. The assignment to the different priority levels may be configurable by a user or predetermined. The example raster data display 200 has been augmented to include geographically relevant flight plan information including a flight path 202 and waypoint 204.

FIG. 2B is a chart depicting another example augmented raster data display 210. The example augmented raster data display 210 depicts the aeronautical information and flight plan information from the example raster data display 200, plus additional information for dynamically augmenting the raster data display 210. In this example, a geographical region 212 on the augmented raster data display 210 was selected (*e.g.,* by hovering the cursor over the region or direct selection using the cursor). Responsive to the selection, the raster chart display system 102 caused additional aeronautical information 214 to be displayed in an overlay on the augmented raster data display 210. In this example, the selected geographical region 212 is around the location of an airport and the additional aeronautical information 214 includes the name of the airport at the selected geographical region 212. This can allow a user (*e.g.,* flight crew member) to extract additional information related to the airport and view data with much better resolution and/or much better visualization.

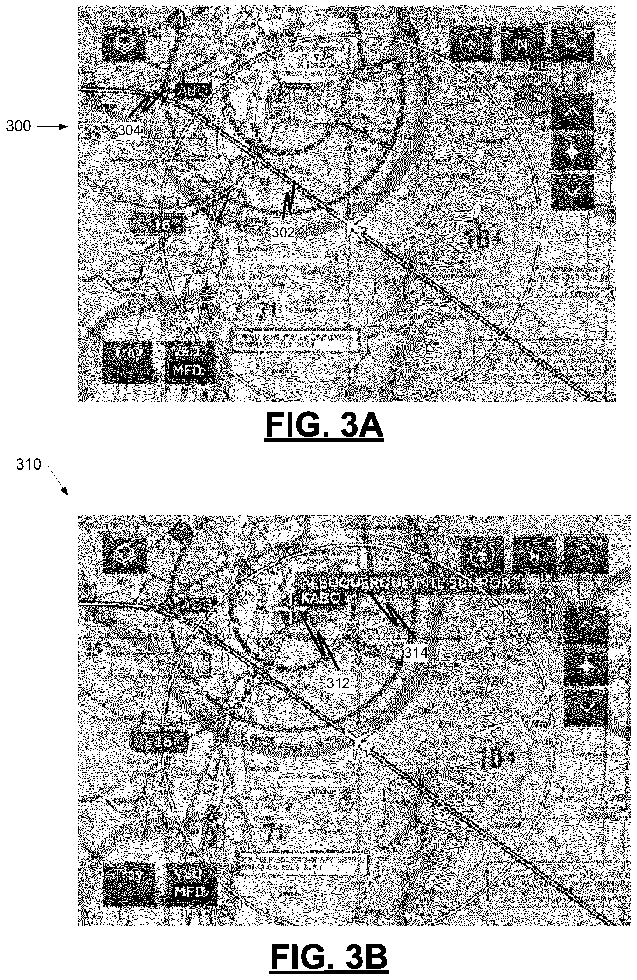

FIGS. 3A and 3B are diagrams depicting example augmented raster charts that may be generated by the raster chart display system 102. FIG. 3A is a chart depicting an example raster data display 300 that depicts some of the interactively augmented aeronautical information from an example FAA published paper chart. The example raster data display 300 has been augmented to include geographically relevant flight plan information including a flight path 302 and waypoint 304 and geographically relevant range, location, and identifiers information.

FIG. 3B is a chart depicting another example augmented raster data display 310. The example augmented raster data display 310 depicts the aeronautical information and flight plan information from the example raster data display 300, plus additional information for dynamically augmenting the raster data display 310. In this example, a geographical region 312 on the augmented raster data display 310 was selected (*e.g.,* by hovering the cursor over the region or direct selection using the cursor). Responsive to the selection, the raster chart display system 102 caused additional aeronautical information 314 to be displayed in an overlay on the augmented raster data display 310. In this example, the selected geographical region 312 is around the location of an airport and the additional aeronautical information 314 includes the name of the airport at the selected geographical region 312. This can allow a user (*e.g.,* flight crew member) to extract additional information related to the airport and view data with much better resolution and/or much better visualization.

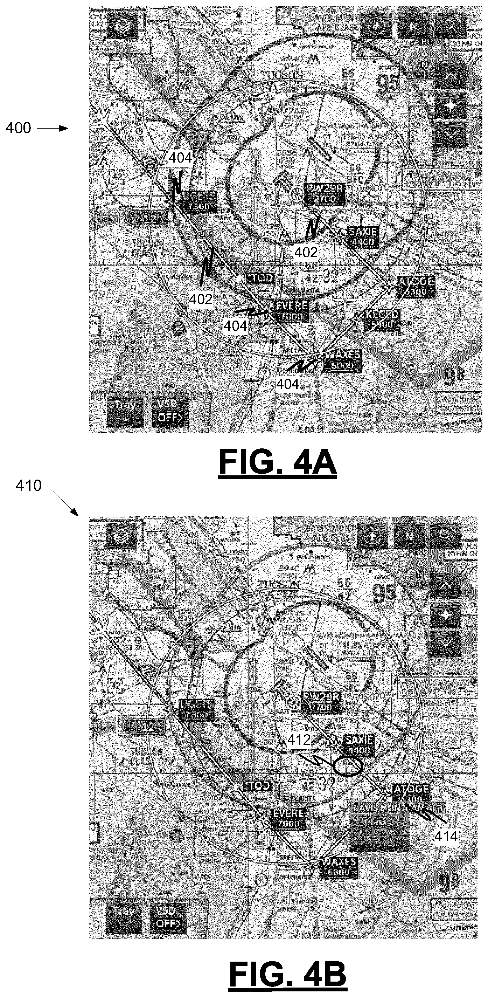

FIGS. 4A and 4B are diagrams depicting example raster charts that may be generated by the raster chart display system 102. FIG. 4A is a chart depicting an example raster data display 400 that depicts some, but not all, the aeronautical information from an example airspace paper chart. The example raster data display 400 has been augmented to include geographically relevant flight plan information including a flight path 402 and waypoints 404 and geographically relevant information.

FIG. 4B is a chart depicting another example augmented raster data display 410. The example augmented raster data display 410 depicts the aeronautical information and flight plan information from the example raster data display 400, plus additional information for dynamically augmenting the raster data display 410. In this example, a geographical region 412 on the augmented raster data display 410 was selected (*e.g.,* by hovering the cursor over the region or direct selection using the cursor). Responsive to the selection, the raster chart display system 102 caused additional aeronautical information 414 to be displayed in an overlay on the augmented raster data display 410. In this example, the selected geographical region 412 is the location of an airport and the additional aeronautical information 414 includes the name of the airport at the selected geographical region 412, the type of the airspace (class C in this example), and airspace dimensions. This can allow a user (*e.g.,* flight crew member) to extract additional information related to the airport and airspace and view data with much better resolution and/or much better visualization.

In these examples, the controller in the raster chart display system 102 may be configured to determine the overall priorities of various display elements for the display device 104 as configurable settings and/or to be dynamically set. In some implementations, the display of flight plan information may be highly desirable and made visible fulltime. In such implementations, flight plan information may always be displayed on top of a raster display. Other elements such as airport, NAVAID, and airways information may generally not be made visible over the raster data but can be dynamically placed over the raster data in an overlay, for example, at certain ranges or on demand. For instance, if an aircraft begins to enter a restricted airspace, information regarding the restricted airspace may be dynamically displayed over the raster area to immediately alert the flight crew. In some implementations, most of the navigational data, airspace, culture, and structural layers information may not be shown over the raster layer.

In one example, the controller that implements the example raster chart display system 102 is configured to: retrieve raster data 106 from a pre-stored raster chart; assign a different priority level from a plurality of priority levels to each of a plurality of types of raster data from the raster chart; cause raster data having a predetermined priority level from the plurality of priority levels to be displayed for a geographic region of interest on the display device in the aircraft during flight and prevent from being displayed raster data not having the predetermined priority level; retrieve database data relating to a flight path of the aircraft from one or more databases; geographically correlate the retrieved database data to the displayed raster data and make the correlated database data available to the display device in one or more hidden layers that are hidden from display; cause a hidden layer of database data that is correlated to a geographical location of the displayed raster data to be displayed as an overlay over a portion of the displayed raster data when the geographical location is selected; cause one or more of flight plan data, weather data, and traffic data to be displayed over the displayed raster data; and cause previously non-displayed raster data having a second priority level that is correlated to a geographical location of the displayed raster data to be displayed as an overlay over a portion of the displayed raster data when the geographical location is selected.

The raster data may comprise topography image data, aeronautical data, railroad data, visual reference points, city boundaries, and/or road data. The database data may comprise one or more of terrain data from an EGPWS terrain database 108, airport data from an airports database 110, navigation aid data from a navigation aids database 112, airspace data from an airspace database 114, communication frequency data, NOTAM data, or other data from another type of database.

The geographical location of the displayed raster data may be selected via touch action on a touchscreen or hovering a cursor over the geographical location on the display device. The geographical location of the displayed raster data may be selected via a cursor click action or touch action at the geographical location on the display device. The geographical location of the displayed raster data may be automatically selected when the aircraft reaches a certain geographically area on its flight path. The geographical location of the displayed raster data may only be selectable when the aircraft reaches a certain geographically area on its flight path.

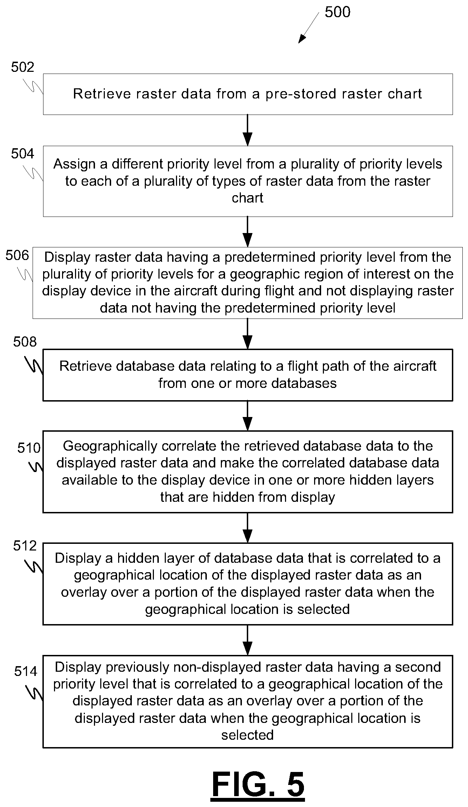

FIG. 5 is a process flow chart depicting an example process 500 in an aircraft for selectively displaying information from raster charts on a cockpit display device (*e.g.,* a navigation display). The order of operation within the process 500 is not limited to the sequential execution as illustrated in the figure, but may be performed in one or more varying orders as applicable and in accordance with the present disclosure.

The example process 500 includes retrieving raster data from a pre-stored raster chart (operation 502). The raster data may comprise, for example, topography image data, aeronautical data, railroad data, visual reference points, city boundaries, and/or road data

The example process 500 includes assigning a different priority level from a plurality of priority levels to each of a plurality of types of raster data from the raster chart (operation 504) and displaying raster data having a predetermined priority level from the plurality of priority levels for a geographic region of interest on the display device in the aircraft and not displaying raster data not having the predetermined priority level (operation 506).

The example process 500 includes retrieving database data relating to a flight path of the aircraft from one or more databases (operation 508). The database data may comprise, for example, one or more of terrain data from an EGPWS terrain database, airport data from an airports database, navigation aid data from a navigation aids database, and airspace data from an airspace database.

The example process 500 includes geographically correlating the retrieved database data to the displayed raster data and make the correlated database data available to the display device in one or more hidden layers that are hidden from display (operation 510).

The example process 500 includes displaying a hidden layer of database data that is correlated to a geographical location of the displayed raster data as an overlay over a portion of the displayed raster data when the geographical location is selected (operation 512). Selecting a geographical location of the displayed raster data may include, for example, touch action on a touchscreen or hovering a cursor over the geographical location on the display device, explicit selection (e.g., via a cursor click action), and/or automatically selecting a geographical location of the displayed raster data when the aircraft reaches a certain geographically area on its flight path. A geographical location of the displayed raster data may only be selectable when the aircraft reaches a certain geographically area on its flight path.

The example process 500 further includes displaying previously non-displayed raster data having a second priority level that is correlated to a geographical location of the displayed raster data as an overlay over a portion of the displayed raster data when the geographical location is selected (operation 514).

Described herein are apparatus, systems, techniques, and articles for providing a dynamically augmented raster data display on a cockpit display. The apparatus, systems, techniques, and articles provided herein can allow a raster data display priority to be dynamically adjusted, and/or localized areas on a raster map to be dynamically associated with geographically collocated Nav/culture/structural information.

Those of skill in the art will appreciate that the various illustrative logical blocks, modules, circuits, and algorithm steps described in connection with the embodiments disclosed herein may be implemented as electronic hardware, computer software, or combinations of both. Some of the embodiments and implementations are described above in terms of functional and/or logical block components (or modules) and various processing steps. However, it should be appreciated that such block components (or modules) may be realized by any number of hardware, software, and/or firmware components configured to perform the specified functions. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention. For example, an embodiment of a system or a component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments described herein are merely exemplary implementations.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A flight deck system in an aircraft for selectively displaying information from raster charts on a display device, the flight deck system comprising a controller, the controller configured to:
retrieve raster data from a pre-stored raster chart;
assign a different priority level from a plurality of priority levels to each of a plurality of types of raster data from the raster chart;
cause raster data having a first predetermined raster data priority level from the plurality of priority levels to be displayed with first augmentation information for a geographic region of interest on the display device in the aircraft and prevent from being displayed raster data not having the first predetermined priority level, wherein the first augmentation information comprises dynamically generated information related to a flight path or plan and database data retrieved from a geo-referenced database stored on the aircraft;
wherein the dynamically generated information related to a flight path or plan comprises one or more of flight plan data, weather data, and traffic data;
wherein database data comprises one or more of terrain data from an EGPWS terrain database, airport data from an airports database, navigation aid data from a navigation aids database, and airspace data from an airspace database;
said first augmentation information being assigned a first predetermined augmentation information priority level; generate a hidden layer of second augmentation information comprising dynamically generated information related to the flight path or plan and database data retrieved from the database that is correlated to a geographical location of the displayed raster data, said second augmentation information being assigned a second predetermined augmentation information priority level; and
cause the hidden layer of second augmentation information to be displayed as an overlay over a portion of the displayed raster data when the geographical location is selected, wherein the controller is configured to cause the dynamically generated information that is assigned the first predetermined augmentation information priority level to be displayed with the raster data having a first predetermined raster data priority level and the database data assigned the first predetermined augmentation information priority level, and
wherein the controller is configured to cause the dynamically generated information assigned the second predetermined augmentation information priority level to be displayed as an overlay over the portion of the displayed raster data when the geographical location is selected.

2. The flight deck system of claim 1, wherein the controller is further configured to cause previously non-displayed raster data having a second priority level that is correlated to a geographical location of the displayed raster data to be displayed as an overlay over a portion of the displayed raster data when the geographical location is selected.

3. The flight deck system of claim 1, wherein the raster data comprises topography image data, aeronautical data, railroad data, visual reference points, city boundaries, and/or road data.

4. The flight deck system of claim 1, wherein a geographical location of the displayed raster data is automatically selected when the aircraft reaches a certain geographically area on its flight path.

5. The flight deck system of claim 1, wherein a geographical location of the displayed raster data is selectable only when the aircraft reaches a certain geographically area on its flight path.

## Patentansprüche

1. Flugdecksystem in einem Flugzeug zum selektiven Anzeigen von Informationen aus Rasterkarten auf einer Anzeigevorrichtung, wobei das Flugdecksystem eine Steuerung umfasst; wobei die Steuerung dazu konfiguriert ist:
Rasterdaten von einer vorgespeicherten Rasterkarte abzurufen;
jedem einer Vielzahl von Typen von Rasterdaten aus der Rasterkarte eine unterschiedliche Prioritätsstufe aus einer Vielzahl von Prioritätsstufen zuzuordnen;
zu veranlassen, dass Rasterdaten, die eine erste vorbestimmte Rasterdaten-Prioritätsstufe aus der Vielzahl von Prioritätsstufen aufweisen, mit ersten Augmentationsinformationen für eine geographische Region von Interesse auf der Anzeigevorrichtung in dem Flugzeug angezeigt werden, und zu verhindern, dass Rasterdaten angezeigt werden, die nicht die erste vorbestimmte Prioritätsstufe aufweisen, wobei die ersten Augmentationsinformationen dynamisch erzeugte Informationen in Bezug auf einen Flugpfad oder -plan und Datenbankdaten, die aus einer in dem Flugzeug gespeicherten georeferenzierten Datenbank abgerufen werden, umfassen;
wobei die dynamisch erzeugten Informationen in Bezug auf einen Flugpfad oder -plan eines oder mehrere von Flugplandaten, Wetterdaten und Verkehrsdaten umfassen;
wobei Datenbankdaten eines oder mehrere von Gebietsdaten aus einer EGPWS-Gebietsdatenbank, Flughafendaten aus einer Flughafendatenbank, Navigationshilfedaten aus einer Navigationshilfedatenbank und Luftraumdaten aus einer Luftraumdatenbank umfassen;
wobei die ersten Augmentationsinformationen einer ersten vorbestimmten Augmentationsinformationen-Prioritätsstufe zugeordnet sind;
eine ausgeblendete Ebene von zweiten Augmentationsinformationen zu erzeugen, die dynamisch erzeugte Informationen in Bezug auf den Flugpfad oder-plan und Datenbankdaten umfassen, die aus der Datenbank abgerufen werden, die in Zusammenhang mit einem geographischen Ort der angezeigten Rasterdaten steht, wobei die zweiten Augmentationsinformationen einer zweiten vorbestimmten Augmentationsinformationen-Prioritätsstufe zugeordnet sind; und
zu veranlassen, dass die ausgeblendete Ebene von zweiten Augmentationsinformationen als eine Überblendung über einen Teil der angezeigten Rasterdaten angezeigt wird, wenn der geographische Ort ausgewählt wird,
wobei die Steuerung dazu konfiguriert ist, zu veranlassen, dass die dynamisch erzeugten Informationen, die der ersten vorbestimmten Augmentationsinformationen-Prioritätsstufe zugeordnet sind, mit den Rasterdaten, die eine erste vorbestimmte Rasterdaten-Prioritätsstufe aufweisen, und mit den Datenbankdaten, die der ersten vorbestimmten Augmentationsinformationen-Prioritätsstufe zugeordnet sind, angezeigt werden, und
wobei die Steuerung dazu konfiguriert ist, zu veranlassen, dass die dynamisch erzeugten Informationen, die der zweiten vorbestimmten Augmentationsinformationen-Prioritätsstufe zugeordnet sind, als eine Überblendung über den Teil der angezeigten Rasterdaten angezeigt werden, wenn der geographische Ort ausgewählt ist.

2. Flugdecksystem nach Anspruch 1, wobei die Steuerung ferner dazu konfiguriert ist zu veranlassen, dass eine zweite Prioritätsstufe aufweisende vorher nicht angezeigte Rasterdaten, die mit einem geographischen Ort der angezeigten Rasterdaten in Zusammenhang stehen, als eine Überblendung über einen Teil der angezeigten Rasterdaten angezeigt werden, wenn der geographische Ort ausgewählt ist.

3. Flugdecksystem nach Anspruch 1, wobei die Rasterdaten Topographie-Bilddaten, aeronautische Daten, Schienenwegdaten, optische Referenzpunkte, Stadtgrenzen und/oder Straßendaten umfassen.

4. Flugdecksystem nach Anspruch 1, wobei ein geographischer Ort der angezeigten Rasterdaten automatisch ausgewählt wird, wenn das Flugzeug einen bestimmten geographischen Bereich auf seinem Flugpfad erreicht.

5. Flugdecksystem nach Anspruch 1, wobei ein geographischer Ort der angezeigten Rasterdaten nur auswählbar ist, wenn das Flugzeug einen bestimmten geographischen Bereich auf seinem Flugpfad erreicht.

## Revendications

1. Système de poste de pilotage dans un aéronef permettant d'afficher sélectivement des informations provenant de cartes matricielles sur un dispositif d'affichage, le système de poste de pilotage comprenant un contrôleur, le contrôleur étant configuré pour :
récupérer des données matricielles à partir d'une carte matricielle préenregistrée ;
attribuer un niveau de priorité différent parmi une pluralité de niveaux de priorité à chacun d'une pluralité de types de données matricielles provenant de la carte matricielle ;
faire en sorte que les données matricielles ayant un premier niveau de priorité de données matricielles prédéterminé parmi la pluralité de niveaux de priorité soient affichées avec des premières informations d'augmentation pour une région géographique d'intérêt sur le dispositif d'affichage dans l'aéronef et empêcher l'affichage de données matricielles n'ayant pas le premier niveau de priorité prédéterminé, dans lequel les premières informations d'augmentation comprennent des informations générées dynamiquement liées à une trajectoire ou un plan de vol et des données de base de données récupérées à partir d'une base de données géoréférencée enregistrée sur l'aéronef ;
dans lequel les informations générées dynamiquement liées à une trajectoire ou à un plan de vol comprennent une ou plusieurs parmi des données de plan de vol, des données météorologiques et des données de trafic ;
dans lequel les données de base de données comprennent une ou plusieurs parmi des données de terrain provenant d'une base de données de terrain EGPWS, des données d'aéroport provenant d'une base de données d'aéroports, des données d'aide à la navigation provenant d'une base de données d'aides à la navigation et des données d'espace aérien provenant d'une base de données d'espace aérien ;
lesdites premières informations d'augmentation se voyant attribuer un premier niveau de priorité d'informations d'augmentation prédéterminé ;
générer une couche cachée de deuxièmes informations d'augmentation comprenant des informations générées dynamiquement liées à la trajectoire ou au plan de vol et des données de la base de données récupérées à partir de la base de données qui sont corrélées à un emplacement géographique des données matricielles affichées, lesdites deuxièmes informations d'augmentation se voyant attribuer un deuxième niveau de priorité d'informations d'augmentation prédéterminé ; et
faire en sorte que la couche cachée de deuxièmes informations d'augmentation soit affichée en superposition sur une partie des données matricielles affichées lorsque l'emplacement géographique est sélectionné,
dans lequel le contrôleur est configuré pour faire en sorte que les informations générées dynamiquement auxquelles est attribué le premier niveau de priorité d'informations d'augmentation prédéterminé soient affichées avec les données matricielles ayant un premier niveau de priorité de données matricielles prédéterminé et les données de base de données auxquelles est attribué le premier niveau de priorité d'informations d'augmentation prédéterminé, et
dans lequel le contrôleur est configuré pour faire en sorte que les informations générées dynamiquement auxquelles est attribué le deuxième niveau de priorité d'informations d'augmentation prédéterminé soient affichées en superposition sur la partie des données matricielles affichées lorsque l'emplacement géographique est sélectionné.

2. Système de poste de pilotage selon la revendication 1, dans lequel le contrôleur est en outre configuré pour faire en sorte que les données matricielles non affichées précédemment ayant un deuxième niveau de priorité qui est corrélé à un emplacement géographique des données matricielles affichées soient affichées en superposition sur une partie des données matricielles affichées lorsque l'emplacement géographique est sélectionné.

3. Système de poste de pilotage selon la revendication 1, dans lequel les données matricielles comprennent des données d'image de topographie, des données aéronautiques, des données ferroviaires, des points de référence visuels, des limites de villes et/ou des données routières.

4. Système de poste de pilotage selon la revendication 1, dans lequel un emplacement géographique des données matricielles affichées est automatiquement sélectionné lorsque l'aéronef atteint une certaine zone géographique sur sa trajectoire de vol.

5. Système de poste de pilotage selon la revendication 1, dans lequel un emplacement géographique des données matricielles affichées peut être sélectionné uniquement lorsque l'aéronef atteint une certaine zone géographique sur sa trajectoire de vol.
